# EUROPEAN PATENT SPECIFICATION

(11) **EP 2 792 925 B1**
(45) Date of publication and mention of the grant of the patent: **19.10.2016**
(21) Application number: 14165288.3
(22) Date of filing: 18.04.2014
(51) Int. Cl.: F16L 33/34, F16L 47/02

(54) **Method of producing a pressure-tight hose and fitting assembly**
Verfahren zur Herstellung einer druckfesten Schlauch- und Anschlussanordnung
Procédé de connection étanche d'un embout à une conduite flexible

(30) Priority: 18.04.2013 IT MI20130639
(43) Date of publication of application: 22.10.2014
(73) Proprietor: Miflex 2 S.p.A., 20852 Villasanta (MB) (IT)
(72) Inventor: Mazzo, Mauro, 23880 Casatenovo (LC) (IT)
(74) Representative: Botti, Mario

(56) References cited:
- WO-A1-98/57092
- WO-A2-2008/007230
- US-A- 2 933 428
- US-A1- 2012 216 903

## Description

### Application Field

The present invention relates to the production of pressure-tight hose and fitting assemblies, in particular of the type provided for connecting an apparatus to the water mains.

The invention finds an useful application in particular for installing white household appliances, or heat pumps or similar apparatuses.

### Known Art

In the industrial fields identified above, it is well known the need for realizing a reliable fluid connection between an apparatus and a water supply mains. For example, reference is made to household appliances using water from the water mains, to perform washing cycles, typically for linen or dishes or for heat pumps requiring a similar water connection.

In order to perform the necessary fluid connections flexible hoses are used, which are grafted at one end on the apparatus to be connected, and at the other end on a water mains tap.

It should be noted that such flexible hoses must have sufficient pressure-tight characteristics in order to realize a reliable connection to the water mains. So hoses are used, able to withstand an operating pressure between 10 and 20 bars. In order to obtain the desired pressure-tight properties, by keeping a high flexibility of the flexible hose, or a minimum bending diameter approximately four times the outer diameter, hoses are made with a layer of plastic material suitably softened with plasticizing additives, which is then reinforced with an external or intermediate braid.

The two connections are realized by means of suitably configured fittings, and are solidly associated to the two ends of the flexible hose.

Usually, the connection of the fitting at the end of the flexible hose is made by means of a crimped metal bushing on the hose, working as a fixing strip on the underlying fitting.

This solution, even substantially in accordance with the industrial needs, has nevertheless some obvious disadvantages, mainly connected to the cost of the metal bushing and to the risks of leakage and waste at the crimped interface.

In order to solve such disadvantages, some hose manufacturers have proposed alternative solutions for joining the connection hose to the connection fitting. In these alternative solutions, the fitting is directly made at the end of the connecting hose, with overmolding or thermoforming techniques. For example, a welding method for plastics is described in the document US2933428. Then, with a greater production cost, a monolithic hose and fitting assembly is made which has no discontinuous points.

In order to apply such manufacturing techniques with satisfactory results, the hose must be free from reinforcing braid, as the presence of such a braid could otherwise cause a relevant weakening of the welding, at the braid/fitting interface. In order to guarantee the necessary pressure-tightness, it is then necessary to adopt of hoses made of rigid or semi-rigid thermoplastic materials. The hose and fitting assembly so obtained therefore has a relatively high rigidity, making difficult its installation, also by expert technicians.

For such reason, fitting hoses made of polyethylene were not able to substitute on the market the typical hoses with crimped fittings, which also with respect to a greater leakage risk are often preferred, due to their flexibility and lower cost.

The three documents WO 2008/007230, US 2012/0216903 and WO 98/57092 regarding different technical fields, provide respective methods for making fittings with multilayered hoses, with respect to the specific needs of their respective fields.

Document US 2012/02 16903 discloses a method according to the preamble of claim 1.

The technical problem at the base of the present invention is that, therefore, of finding a method of producing a hose and fitting assembly which overcomes the drawbacks of the known art, and producing in particular a hose with fittings able to maintain a high flexibility.

### Summary of the invention

The aforesaid technical problem is solved by a method of making a pressure-tight hose and fitting assembly, suitable for connecting an apparatus to the water mains, said method comprising the following steps:
- preparing a pressure-tight flexible hose, comprising at least one layer of thermoplastic material and at least one braided reinforcing layer, said flexible hose having a hose fixing end;
- preparing a fitting made of thermoplastic material and having a fitting fixing end, in which an annular seat of a size suitable for receiving the hose fixing end is formed;
- inserting the hose fixing end inside the annular seat of the fitting;
- fastening said hose fixing end to the fitting fixing end, by means of spin welding.

The annular seat previously defined has a bottom surface, which defines a stop shoulder for the hose fixing end, a collecting groove opening in the bottom of said bottom surface, said method also comprising a step for directing at least part of the thermoplastic material melt during spin welding, inside said collecting groove, and let it solidify, so as to define a solid bridge.

The aforesaid flexible hose comprises at least one innermost layer of thermoplastic material, and at least one braided reinforcing layer, said solid bridge covering, at the hose fixing end, said intermediate reinforcing layer.

It must be noted that in the present invention, the term "pressure-tight" means the mechanical property of a hose to withstand the normal working pressures, deriving from the connection of an apparatus to the water mains.

As an expert in the field can easily appreciate, the use of spin welding overcomes in an efficient way at least part of the drawbacks which are found in the known art.

If on one hand the spin welding makes a firm and absolutely tight welding, by eliminating a potential point of loss at the connection of the apparatus to the water mains, on the other hand the flexible hose used for welding can comprise without any problems a braided reinforcement. As previously discussed, this hose structure, which is analogous to that of currently fitted hoses with a crimped bushing, permits to satisfy the pressure-tightness requirements, even maintaining a high flexibility. The spin welding of a flexible hose of the known type, such as for example a multilayered hose made of PVC, to a fitting of the same material, can be then realized with more than satisfactory results.

Bringing the melt thermoplastic material into the collecting groove in order to define the solid bridge, overhanging the braided reinforcing layer, a double advantage is reached.

From one hand, an outpouring of melt material is permitted that does not exit towards the outside, which would define unaesthetic burrs or weakened points in the structure of the welding.

On the other hand, this a substantial contribution for reinforcing the weld, just at the maximum potentially critical point, or at the front section of the reinforcing braided layer. In fact, the solid bridge, made of the thermoplastic material of the adjacent layers, covers the interface between the braided layer and the fitting, which could represent in another way a potential weakening of the weld.

The foresaid flexible hose can comprise in particular the first innermost layer of thermoplastic material, and a second outermost layer of thermoplastic material, separated by the braided intermediate reinforcing layer, said solid bridge connecting, at the end of the fixing of the hose, the first layer and the second layer of thermoplastic material on said braided reinforcing layer.

In this case, at the end of the fixing of the hose and after its insertion into the annular seat of the fitting, the braided reinforcing layer is preferably entirely placed in front of the collecting groove, whereas the first layer and the second layer of thermoplastic material are partially facing said collecting groove.

Said collecting groove can then define on the bottom surface an annular aperture with a thickness greater than the thickness of the braided reinforcing layer.

In order to obtain even more satisfactory welding results, the first layer of thermoplastic material, the second layer of thermoplastic material and the fitting can be made of the same thermoplastic material or of thermoplastic materials of the same family.

As an alternative to the aforesaid hose architecture, the flexible hose can comprise an innermost layer of thermoplastic material, covered by a single outermost reinforcing braided layer, wherein the innermost thermoplastic material, the outermost braided reinforcing layer and the fitting are made of the same thermoplastic material or of thermoplastic materials of the same family.

Once again, the compatibility of the different layers and of the fitting guarantees a satisfactory spin welding.

The annular seat can be limited by a first side surface and by a second side surface, respectively defined by an outer annular wall and an inner annular wall mutually concentric, with at least one portion of at least one of said side surfaces having a slope towards the outer part of the annular seat.

The slope towards the outer part has a double advantage, as it facilitates the insertion of the flexible hose and defines an outpouring area for the material flowing during the spin welding operation.

The first and second side surfaces can have respectively a first and a second proximal cylindrical portion, respectively followed by a first and second distal inclined portion.

The first and second proximal portions extend for a first depth l₁ ; the first and second distal portion extend for a second depth l₂. The relationship between the first and second depths h and l₂ is preferably less than one, and preferably it is more than 0,75. The first depth l₁ is preferably and substantially equal to the depth of the previously defined collecting groove.

The first distal sloping portion preferably has a slope greater than the second distal sloping portion. In particular, the first distal portion can have a sloping angle α between 3° and 7°, preferably of 5°, the second distal portion can have a sloping angle β between 1° and 3°, preferably of 2°.

The inner annular wall preferably has a length greater than the outer annular wall, so as to avoid the penetration of the melt thermoplastic material into the flexible hose, during the spin welding step.

The previously defined geometrical structures and respective dimensional details are particularly advantageous, as they produce optimal results in terms of easiness of prearrangement and efficiency in welding.

The outer annular wall can be placed flush with respect to a main body of the fitting, and this permits to obtain in particular a compact and resistant fitting, which can be easily made by injection molding.

The previously defined flexible hose, as explained above, can be a multilayered hose, comprising an innermost layer and an outermost, separated by an intermediate reinforcing layer, said innermost layer and said outermost layer being made of a thermoplastic material, preferably of PVC.

Preferably, the innermost layer, the outermost layer and the fitting are made of same thermoplastic material.

The flexible hose, as already previously mentioned, can also made of a mono-layered architecture, wherein an extruded or corrugated thermoplastic layer is coated by a braided reinforcement with a single filament of polyamide, polyether or similar. In this case, the thermoplastic layer is preferably made of the same material of the braid.

The flexible hose is preferably selected among those provided with high flexibility, i.e. it has a minimum bending radius, at least six times smaller than the outer diameter of the hose itself; preferably such a bending radius is equal or even four times smaller than the outer diameter of the hose.

Advantageously, the fitting has at least one non cylindrical fixing profile, for example a recessed polygonal profile, opposed to the fitting fixing end. The fastening step of said hose fixing end to the fitting fixing end by means of a spin welding can thus comprise a preliminary step of coupling a mandrel of a spin welding machine to said fixing profile.

The above procedure permits to avoid the use of gripping jaws, in order to block the fitting during the spin welding. Consequently, the spin welding can be performed at high speed, for example with a rotation speed between 3500 and 6000 revolutions. The use of so high rotation speeds permits to realize the weld, by applying relatively reduced compression forces between the flexible hose and the fitting, in particular between 0,8 N and 2,5 N, by avoiding undesired deformations of the pieces to be coupled.

The previously defined technical problem is also solved by a fitting hose assembly realized with the above described method.

Further characteristics and advantages will be more evident from the following detailed description of a preferred, but not exclusive embodiment of the present finding, with reference to the united figures, given as an exemplary but not limitative title.

### Brief description of the drawings

Figure 1 represents a first step of an embodiment of a hose and fitting assembly according to the present invention;
figure 2 represents a second step of the method in figure 1;
figure 3 represents a side view partially in section of the hose and fitting assembly realized with the method of figures 1 and 2;
figure 4 represents a side view partially in section of a fitting used to realize the hose and fitting assembly according to figure 3;
figure 5 represents a front view of the fitting in figure 4;
figure 6 represents an enlarged view of a detail of the fitting section in figure 4;
figure 7 represents a side view partially in section of a flexible hose, which can be used in the contest of the present invention, in alternative to that shown in figure 3.

### Detailed description

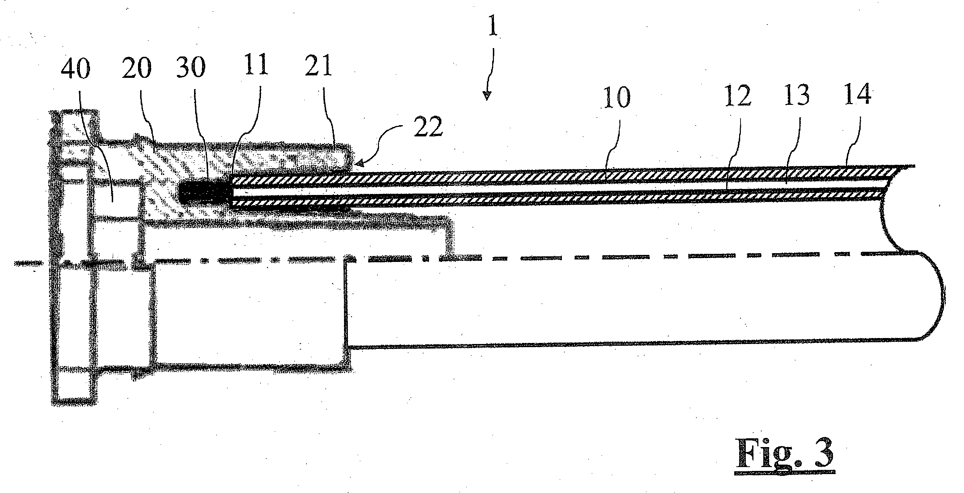

With reference to the annexed figure 3, it is generally identified with 1 a hose and fitting assembly according to the present invention. As previously described, the hose and fitting assembly has the function of connecting an appliance, for example a household appliance or a heat pump, to a water mains.

The hose and fitting assembly 1 comprises in particular a per se known flexible hose 10. On at least one end of the flexible hose 10, identified in the following as fixing end 11 of the hose, is mutually linked to a fitting 20 of thermoplastic material, which permits an easy connection to the appliance or to the water mains.

It is noted that, preferably, at both ends of the flexible hose 10, is associated a respective fitting 20. Nevertheless, in order not to complicate in an useless way the present description, in the following it will be referred to a fixing of a single fitting 20 at the previously defined end of the fixing hose 11, being anyway possible to repeat such an operation, to fix a further fitting, of a similar shape, at least in the contacting areas with the flexible hose, at the opposed end.

The flexible hose 10 can be formed by different known in the art hoses and they are applied in the technical field pertaining the present invention, in particular mono-layered hoses of thermoplastic material, or multilayered hoses provided at least with one outermost layer of thermoplastic material.

In a preferred embodiment, shown in particular in figure 3, the flexible hose 10 is a PVC reinforced hose, comprising three layers. An innermost layer 12 and an outermost layer 14 are both made of PVC. The two layers 12, 14 are separated by an intermediate reinforcing layer 13, in particular a textile layer, for example of polyester. Such intermediate reinforcing layer is realized in a concrete way preferably in a monofilament braid. Other embodiments can provide the use of different types of flexible hoses. It is for example possible to adopt multilayered hoses such as the one previously described, wherein PVC is substituted with another suitable thermoplastic material, for example polyamide or polyethylene.

Furthermore, mono-layered hoses can be used, both of the extruded and corrugated type, made of a suitable thermoplastic material (they are always cited as an example PVC, PE, PA). The mono-layered hose can advantageously be coated with a reinforcement of a monofilament braid of polyamide, polyester, or other suitable materials.

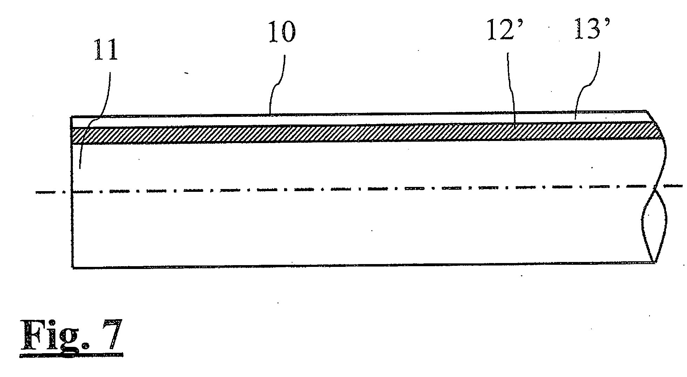

A flexible hose 10 of this type is shown for example in the annexed figure 7, wherein an innermost extruded or corrugated layer of thermoplastic material 12' is covered by a single, outermost reinforcing braided layer 13', with a monofilament braid. The innermost thermoplastic material 12', the outermost reinforcing braided layer 13' and the fitting 20 are in this case made of the same thermoplastic material, preferably nylon or polyester.

It is noted that a qualifying characteristics of the present invention is to permit the making of a hose and fitting assembly 1 with a sufficiently soft and flexible hose, in order to meet the needs of the technicians. As a consequence, the aforesaid, different makings for the flexible hose 10 have all preferably the technical property of a high flexibility. In particular, the minimum bending radius for such a flexible hose 10 will be preferably chosen equal or four times smaller the outer diameter of the hose itself. In order to obtain this property, it is worked in a per se known way, by using the suitable plastic additives in the formation seat of the thermoplastic material, defining the rigidity of the hose.

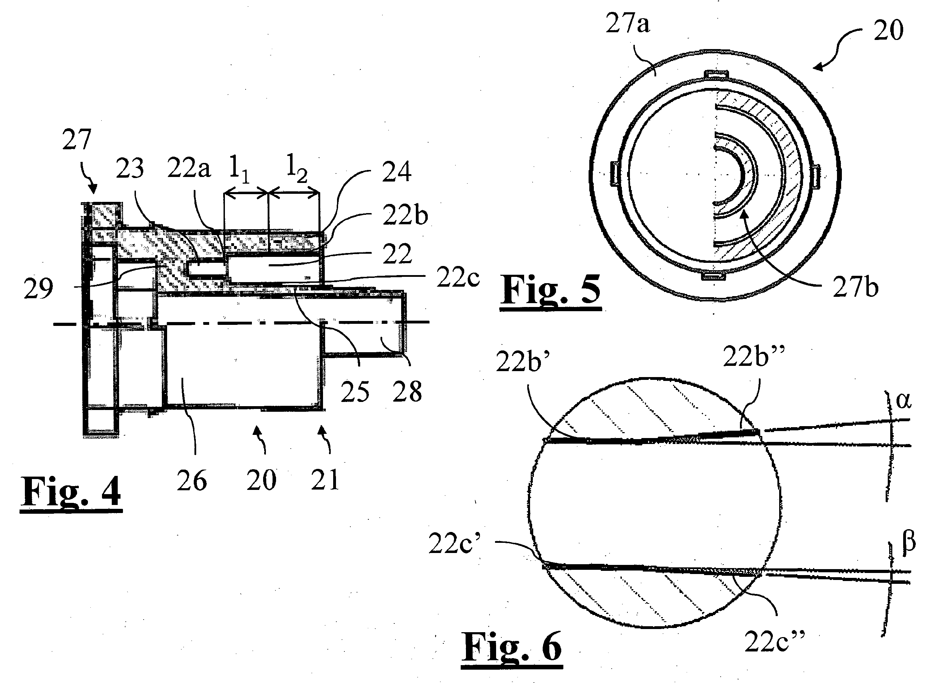

The fitting 20, represented in a single way in figures 4-6 is on the contrary made by injection molding, of a rigid thermoplastic material. Preferably, the thermoplastic material used for molding the fitting 20 is the same material used for the flexible hose 10, even if it is not added to plastifiers which give the flexibility to such a hose. In the preferred embodiment with a flexible hose 10 in reinforced PVC, the fitting 20 will be also made of PVC.

The fitting 20 is specifically shaped in order to be fixed to the hose fixing end 11.

In particular, it has a main body 26, with a longitudinal extension. An end is provided for connecting to the appliance and/or to the water mains, the opposed end being on the contrary provided for mutually connecting to the aforesaid flexible hose 10.

The first of such ends, in the following identified as connecting end 27, can be shaped in an arbitrary way according to the known art. For example, even if in the here described embodiment such connecting end 27 is longitudinal, it could represent a 90° angle, as known in the art.

It is therefore noted the presence of at least one non cylindrical fixing profile 40, in the here described embodiment with a built-in hexagonal profile, which permits to couple in a stable way the connecting end 27 to a spindle during the spin welding described in the following.

On the contrary, the second end, later on identified as fitting fixing end 21, has the peculiar properties derived from the following description.

The main body 26 is made with a cylindrical bushing, provided with a connecting flange 27a at the connecting end 27. Such connecting flange 27a surrounds a connecting mouth 27b, made according to the known way. Once more, it is underlined how this fitting portion 20 can be made of different shapes and sizes, according to the specific technical needs of the object.

At the end of the fitting fixing end 21, the main body 26 opens on the other hand over an annular seat 22. The annular seat 22 is defined by an outer annular wall 24, which belongs to the bushing defining the main body 26 and to an opposed inner annular wall 25, defined by a bushing insert 28, concentric with respect to the bushing of the main body 26.

The bush insert, on which the flexible hose 10 connects, is in a direct communication with the aforesaid connecting mouth 27b. The bush insert 28 is united to the main body 26 by means of an annular bridge 29, which connects the end of the bush insert 28 to an intermediate section of the bushing of the main body 26. The bush insert 28 extends beyond the defined periphery from the bushing of the main body 26, so it has a projecting portion outside the main body, at the fitting fixing end 21.

The annular seat 22 extends between a first lateral surface 22b, defined by the outer annular wall 24, and a second lateral surface 22c, defined by the inner annular wall 25. It is delimited by a bottom wall 22a, defined by an annular bridge 29, and it opens in front of an annular inserting mouth.

The annular seat 22 is shaped in order to house the fitting fixing end 11 of the flexible hose 10, inserting with an interference between the lateral surfaces 22b, 22c, until it reaches the point defined by the bottom wall 22a.

It is noted that, beyond the bottom wall 22a, in the annular bridge an also annular collecting groove 23 is made, proceeding the extension of the annular seat 22, even if it has a radially lower size. Hence, between the annular seat 22 and the collecting groove 23 a narrowing is present, which defines an end shoulder for the flexible hose 10, inserting then in the annular seat 22.

It is noted that the first and second lateral surfaces 22b, 22c both have proximal portions, i.e. adjacent the bottom surface 22a, respectively first 22b' and second 22c' and first and second 22b", 22c" distal portions, wherein the proximal and distal portions have different slopes. In particular, the proximal portions 22b' and 22c' are mutually parallel cylindrical surfaces, whereas the distal portions 22b" and 22c" are mutually divergent inclined surfaces, towards the annular inserting mouth.

In the here described preferred embodiment, the first distal portion 22b" has a slope with respect to the corresponding proximal cylindrical portion 22b', equal to an angle α of approx 5°; the second distal portion 22c" has a slope with respect to the corresponding proximal cylindrical portion 22c', equal to an angle β of approx. 2°. This last slope is also maintained in the outer inserting bush section 28, with respect to the main body 26.

In the present embodiment, the first and second proximal portions 22b', 22c' extend for a first depth l₁, the first and second distal portions 22b", 22c" extend for a second depth l₂. The first depth l₁ is to be understood as the extension of the proximal portions 22b', 22c' from the level of the bottom wall 22a up to the onset of the distal portions 22b", 22c"; the second depth l₂ is to be understood as the extension of the distal portions 22b", 22c" from this point to an annular inserting mouth, surrounded by the outer annular wall 24.

The second depth l₂ is greater than the first depth l₁; in particular the relationship between the first and the second depths l₁/l₂ is approximately equal to 0,75. It is also noted that the first depth l₁ is substantially equal to the depth of the collecting groove 23.

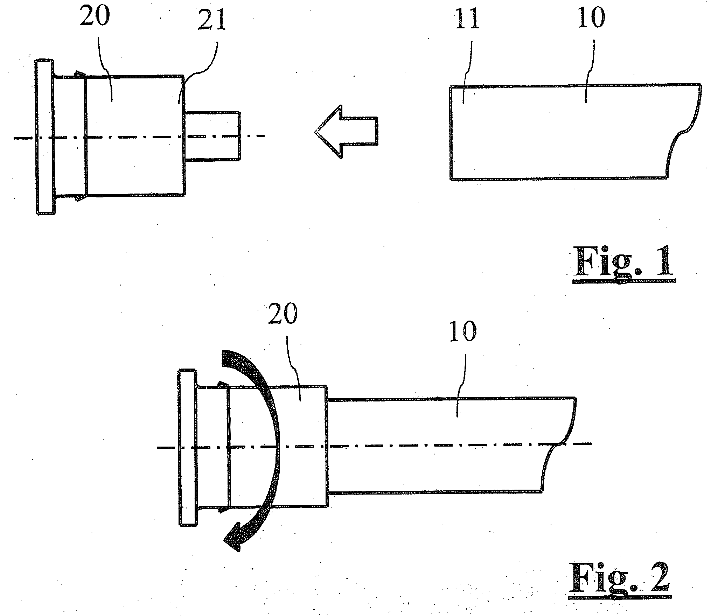

In order to mutually connect the aforesaid flexible hose 10 and the fitting 20, and in order to obtain the hose and fitting assembly 1 according to the present invention, the method described below is used, also shown in the annexed figures 1 and 2.

In a first step, shown in the annexed figure 1, the fitting fixing end 11 of the flexible hose 10 is inserted with an interference inside the annular seat 22, which is provided for the fitting fixing end 21. It is noted that the flared distal portions 22b", 22c" facilitates the insertion of the flexible hose 10; in particular the flexible hose 10 can be easily shaped on the conical end of the bush insert 28.

The inserting operation so permits to fix the hose fixing end 11 among the opposed parallel and proximal portions 22b', 22c' of the fitting 20. The end stops against the bottom part defined by the bottom surface 22a.

In a second step, shown in the annexed figure 2, the technical spin-welding note is used, to associate the fitting 20 to the hose fixing end 11. In particular, by adopting a suitable operating machine, a rapid rotation of the fitting with respect to the hose fixing end 11 is made, which is maintained fixed. The heat developed by friction between the two elements can contribute to define a partial melting of the contacting thermoplastic material, and to define then a welding once the same are cooled.

The spin-welding is performed after having coupled the fixing profile 40 of the fitting 20 to the mandrel of the operating machine, with a rotation speed comprised between 3500 and 6000 revolutions and by applying compression forces between the flexible hose 10 and the fitting 20, comprised between 0,8 N and 2,5 N.

It is noted that in this step, the melt material flows both at the inside of the collecting groove 23 and in the free space around the flexible hose 10, from the slope of the distal portions 22b", 22c" of the annular seat 22. The accumulation and the solidification of material in these hidden areas permits to avoid the out-flowing of burrs, which besides their anti-aesthetic nature could also weaken the piece.

Furthermore, the solidification of material flowing into the collecting groove 23 contributes in a substantial way to reinforce the welding.

In fact, a solid bridge 30 of thermoplastic material is formed, which covers, at the hose fixing end 11, the intermediate reinforcing layer 13.

In fact, it is noted that such an intermediate reinforcing layer 13, owing to the material and its working, could be incompatible with the thermoplastic material of the fitting 20. So, at the interface between the intermediate reinforcing layer 13 and the fitting 20, a weakening welding point would be formed. The solid bridge 30, thanks to the presence of the collecting groove 23, permits on one hand to exclude such an interface welding point, by defining a strengthening of the same.

The main advantage of the finding described before is that it is possible, even if non provided in the known art, to realize a hose and fitting assembly, wherein the hose has a high flexibility, which facilitates the installing operations of the apparatus to the water mains.

Another advantage of the present finding derives from the high quality, both aesthetic and structural, of the weld connecting the flexible hose to the fitting. In particular, the tear resistance is in this case particularly high, equal approx. to 1 kN, and the assembly does not have visible burrs with an outer detection.

A further, important advantage of the present finding is in the reduction of producing costs of the hose and fitting assembly.

A further advantage of the present finding derives from the high chance of repetition of the spin-welding apparatus, wherein once the electronic regulation of the machine has been made, identical pieces are made, with an unchanged quality, by reducing or eliminating the presence of production waste.

Obviously, to the finding described before an expert of the field, in order to satisfy contingent and specific needs, could make various changes and variables, in any case all within the protective scope of the invention, such it is defined in the following claims.

## Claims

1. Method of producing a pressure-tight hose and fitting assembly (1) suitable for connecting an apparatus to the water mains, said method comprising the following steps:
- preparing a pressure-tight flexible hose (10) comprising at least one layer of thermoplastic material (12; 12'; 14) and at least one braided reinforcing layer (13; 13'), said flexible hose (10) having a hose fixing end (11);
- preparing a fitting (20) made of thermoplastic material and having a fitting fixing end (21) in which an annular seat (22) of a size suitable for receiving the hose fixing end (11) is formed;
- inserting the hose fixing end (11) inside the annular seat (22) of the fitting (20);
- fastening said hose fixing end (11) to the fitting fixing end (21) by means of spin welding;
wherein the annular seat (22) has a bottom surface (22a) which defines a stop shoulder for the hose fixing end (11), a collecting groove (23) opening in the bottom of said bottom surface (22a), said method further comprising:
- a step of directing at least part of the thermoplastic material melt during spin welding inside said collecting groove (23) and letting it solidify, thereby forming a solid bridge (30);
wherein one of said at least one layer of thermoplastic material (12, 12', 14) is a first innermost layer of thermoplastic material (12, 12') of said pressure-tight flexible hose (10), **characterized in that** said solid bridge (30) covers, at the hose fixing end (11), said braided reinforcing layer (13, 13').

2. Method according to claim 1, wherein said flexible hose (10) comprises the first innermost layer of thermoplastic material (12) and a second outermost layer of thermoplastic material (14) separated by the intermediate braided reinforcing layer (13), said solid bridge (30) connecting, at the hose fixing end (11), the first layer of thermoplastic material (12) and the second layer of thermoplastic material (14) over said braided reinforcing layer (13).

3. Method according to Claim 2, where, at the hose fixing end (11) and after its insertion into the annular seat (22) of the fitting (20), the braided reinforcing layer (13) is entirely placed in front of the collecting groove (23), whereas the first layer of thermoplastic material (12) and the second layer of thermoplastic material (14) are partially facing said collecting groove (23).

4. Method according to claim 3, where said collecting groove (23) defines on the bottom surface (22a) an annular aperture with a thickness greater than the thickness of the braided reinforcing layer (13).

5. Method according to one of the preceding claims, where the first layer of thermoplastic material (12), the second layer of thermoplastic material (14) and the fitting (20) are made of the same thermoplastic material or thermoplastic materials of the same family.

6. Method according to claim 1, wherein the first innermost layer of thermoplastic material (12') is lined with a single outermost braided reinforcing layer (13'), wherein the first innermost layer of thermoplastic material (12'), the outermost braided reinforcing layer (13') and the fitting (20) are made of the same thermoplastic material or thermoplastic materials of the same family.

7. Method according to one of the preceding claims, wherein the annular seat (22) is delimited by a first side surface (22b) and by a second side surface (22c) which are respectively defined by an outer annular wall (24) and by an inner annular wall (25) which are concentric with each other, at least one portion of at least one of said side surfaces (22b, 22c) having an inclination towards the outside of the annular seat (22).

8. Method according to Claim 7, wherein the first and the second side surfaces (22b, 22c) respectively have a first and a second cylindrical proximal portion (22b', 22c') respectively followed by a first and a second inclined distal portion (22b", 22c").

9. Method according to Claim 8, wherein the first inclined distal portion (22b") has an inclination greater than that of the second inclined distal portion (22c").

10. Method according to one of Claims 7 or 8, wherein said inner annular wall (25) has a length greater than that of the outer annular wall (24).

11. Method according to one of the preceding claims, wherein said fitting (20) has at least one non cylindrical fixing profile (40), said fastening step of said hose fixing end (11) to the fitting fixing end (21) by means of a spin welding comprising a preliminary step of coupling a mandrel of a spin welding machine to said fixing profile (40).

12. Method according to claim 11, wherein said fixing profile is a recessed polygonal profile, opposed to the fitting fixing end (21).

## Patentansprüche

1. Verfahren zur Herstellung einer druckdichten Schlauch- und Anschlussanordnung (1) zum Anschließen eines Gerätes an das Wassernetz, wobei das Verfahren die folgenden Schritte umfasst:
- Vorbereiten eines druckdichten flexiblen Schlauches (10), der mindestens eine Schicht aus thermoplastischem Material (12; 12'; 14) und mindestens eine geflochtene Verstärkungsschicht (13; 13') umfasst, wobei der flexible Schlauch (10) mit einem Schlauchbefestigungsende (11) versehen ist;
- Vorbereiten eines Anschlussstücks (20), das aus thermoplastischem Material besteht und ein passendes Befestigungsende (21) aufweist, in dem ein ringförmiger Sitz (22) einer geeigneten Größe für die Aufnahme des Schlauchbefestigungsende (11) ausgebildet ist;
- Einführen des Schlauchbefestigungsendes (11) in das Innere des ringförmigen Sitzes (22) des Anschlussstücks (20);
- Befestigen des Schlauchbefestigungsendes (11) an dem Befestigungsende (21) des Anschlussstücks mittels Rotationsschweißen, wobei der ringförmige Sitz (22) eine Bodenfläche (22a) aufweist, die eine Anschlagschulter für das Schlauchbefestigungsende (11) definiert, wobei eine Auffangrinne (23) sich in den Boden der Bodenfläche (22a) öffnet, wobei das Verfahren ferner umfasst:
- einen Schritt des Richtens wenigstens eines Teils des thermoplastischen Materials, das während des Rotationsschweißens geschmolzen ist, in die Sammelrille (23) und es dort Verfestigen lassen, wobei eine feste Brücke (30) gebildet wird;
wobei eine der mindestens einen Schicht aus thermoplastischem Material (12, 12', 14) eine erste innerste Schicht aus thermoplastischem Material (12; 12') des druckfesten Schlauches (10) ist, **dadurch gekennzeichnet, dass** die feste Brücke (30) am Schlauchbefestigungsende (11) die geflochtene Verstärkungsschicht (13, 13') bedeckt.

2. Verfahren nach Anspruch 1, wobei der flexible Schlauch (10) die erste innerste Schicht aus thermoplastischem Material (12) und eine zweite äußerste Schicht aus thermoplastischem Material (14) umfasst, die durch die dazwischenliegende geflochtene Verstärkungsschicht (13) getrennt sind, wobei die feste Brücke (30) am Schlauchbefestigungsende (11) die erste Schicht aus thermoplastischem Material (12) und die zweite Schicht aus thermoplastischem Material (14) über die geflochtene Verstärkungsschicht (13) verbindet.

3. Verfahren nach Anspruch 2, wobei an dem Schlauchbefestigungsende (11) und nach dessen Einführen in den ringförmigen Sitz (22) des Anschlussstücks (20) die geflochtene Verstärkungsschicht (13) vollständig vor der Sammelrille (23) angeordnet wird, während die erste Schicht aus thermoplastischem Material (12) und die zweite Schicht aus thermoplastischem Material (14) teilweise der Sammelrille (23) gegenüberliegen.

4. Verfahren nach Anspruch 3, wobei die Sammelrille (23) auf der Bodenfläche (22a) eine ringförmige Öffnung mit einer Dicke definiert, die größer als die Dicke der geflochtenen Verstärkungsschicht (13) ist.

5. Verfahren nach einem der vorhergehenden Ansprüche, wobei die erste Schicht aus thermoplastischem Material (12), die zweite Schicht aus thermoplastischem Material (14) und das Anschlussstück (20) aus dem gleichen thermoplastischen Material oder thermoplastischen Materialien der gleichen Familie hergestellt sind.

6. Verfahren nach Anspruch 1, wobei die innerste Schicht aus thermoplastischem Material (12') ausgekleidet ist mit einer einzigen äußeren geflochtenen Verstärkungsschicht (13'), wobei die innerste Schicht aus thermoplastischem Material (12'), die äußerste geflochtene Verstärkungsschicht (13') und das Anschlussstück (20) aus dem gleichen thermoplastischen Material oder thermoplastischen Materialien der gleichen Familie hergestellt sind.

7. Verfahren nach einem der vorhergehenden Ansprüche, wobei der ringförmige Sitz (22) durch eine erste Seitenfläche (22b) und durch eine zweite Seitenfläche (22c) begrenzt ist, die jeweils durch eine äußere ringförmige Wand (24) und durch ein innere ringförmige Wand (25) definiert sind, die konzentrisch zueinander sind, wobei zumindest ein Teil der Seitenflächen (22b, 22c) eine Neigung in Richtung der Außenseite des ringförmigen Sitzes (22) aufweist.

8. Verfahren nach Anspruch 7, wobei die erste und die zweite Seitenflächen (22b, 22c) jeweils einen ersten und einen zweiten zylindrischen proximalen Abschnitt (22b', 22c') jeweils gefolgt von einem ersten und einem zweiten geneigten distalen Abschnitt (22b", 22c") aufweisen.

9. Verfahren nach Anspruch 8, wobei der erste geneigte distale Abschnitt (22b") eine Neigung hat, die größer ist als die des zweiten geneigten distalen Abschnitts (22c").

10. Verfahren nach einem der Ansprüche 7 oder 8, wobei die innere ringförmige Wand (25) eine Länge hat, die größer ist als die der äußeren ringförmigen Wand (24).

11. Verfahren nach einem der vorhergehenden Ansprüche, wobei das Anschlussstück (20) mindestens ein nicht zylindrisches Befestigungsprofil (40) aufweist, wobei der Befestigungsschritt des Schlauchbefestigungsendes (11) an dem Befestigungsende (21) des Anschlussstücks mittels Rotationsschweißen umfassend einen vorbereitenden Schritt des Koppelns eines Doms einer Rotationsschweißmaschine an das Befestigungsprofil (40) erfolgt.

12. Verfahren nach Anspruch 11, wobei das Befestigungsprofil ein vertieftes polygonales Profil gegenüber dem Befestigungsende (21) des Anschlussstücks ist.

## Revendications

1. Procédé pour fabriquer un assemblage (1) étanche sous pression constitué d'un tuyau et d'un raccord, adapté pour le raccordement d'un appareil au réseau de distribution d'eau, ledit procédé comprenant les étapes suivantes consistant à :
- Préparer un tuyau flexible (10) étanche sous pression et comprenant au moins une couche de matière thermoplastique (12 ; 12' ; 14) et au moins une couche de renforcement tressée (13 ; 13'), ledit tuyau flexible (10) ayant une extrémité de fixation de tuyau (11) ;
- Préparer un raccord (20) en matière thermoplastique et ayant une extrémité de fixation de raccord (21) dans laquelle est formé un siège annulaire (22) d'une taille appropriée pour recevoir l'extrémité de fixation de tuyau (11) ;
- Insérer l'extrémité de fixation de tuyau (11) à l'intérieur du siège annulaire (22) du raccord (20) ;
- Fixer ladite extrémité de fixation de tuyau (11) à l'extrémité de fixation de raccord (21) au moyen d'un soudage par rotation ;
le siège annulaire (22) présentant une surface de fond (22a) définissant un épaulement de butée pour l'extrémité de fixation de tuyau (11), une rainure de collecte (23) débouchant dans le fond de ladite surface de fond (22a), ledit procédé comprenant en outre
- une étape consistant à diriger au moins une partie de la matière thermoplastique fondue lors de soudage par rotation à l'intérieur de ladite rainure de collecte (23) et à la laisser se solidifier de manière à former un pont solide (30) ;
une desdites au moins une couche de matière thermoplastique (12, 12', 14) étant une première couche de matière thermoplastique (12, 12') la plus à l'intérieur dudit tuyau flexible étanche sous pression (10), **caractérisé en ce que** ledit pont solide (30) recouvre, à l'extrémité de fixation du tuyau (11), ladite couche de renforcement tressée (13, 13').

2. Procédé selon la revendication 1, dans lequel ledit tuyau flexible (10) comprend la première couche de matière thermoplastique (12) la plus à l'intérieur et une deuxième couche de matière thermoplastique (14) la plus à l'extérieur séparées par la couche de renforcement tressée intermédiaire (13), ledit pont solide (30) reliant, à l'extrémité de fixation de tuyau (11), la première couche de matière thermoplastique (12) et la deuxième couche de matière thermoplastique (14) par-dessus ladite couche de renforcement tressée (13).

3. Procédé selon la revendication 2, dans lequel, à l'extrémité de fixation de tuyau (11) et après son insertion dans le siège annulaire (22) du raccord (20), la couche de renforcement tressée (13) est entièrement placée en face de la rainure de collecte (23), tandis que la première couche de matière thermoplastique (12) et la deuxième couche de matière thermoplastique (14) sont partiellement en regard de ladite rainure de collecte (23).

4. Procédé selon la revendication 3, dans lequel ladite rainure de collecte (23) définit sur la surface de fond (22a) une ouverture annulaire ayant une épaisseur supérieure à l'épaisseur de la couche de renforcement tressée (13).

5. Procédé selon l'une des revendications précédentes, dans lequel la première couche de matière thermoplastique (12), la deuxième couche de matière thermoplastique (14) et le raccord (20) sont réalisés dans la même matière thermoplastique ou dans des matières thermoplastiques de la même famille.

6. Procédé selon la revendication 1, dans lequel la première couche de matière thermoplastique (12') la plus à l'intérieur est doublée d'une seule couche de renforcement tressée (13') la plus à l'extérieur, la première couche de matière thermoplastique (12') la plus à l'intérieur, la couche de renforcement tressée (13') la plus à l'extérieur et le raccord (20) étant réalisés dans la même matière thermoplastique ou dans des matières thermoplastiques de la même famille.

7. Procédé selon l'une des revendications précédentes, dans lequel le siège annulaire (22) est délimité par une première surface latérale (22b) et par une deuxième surface latérale (22c) qui sont définies respectivement par une paroi annulaire extérieure (24) et par une paroi annulaire intérieure (25) qui sont concentriques entre elles, au moins une partie d'au moins l'une desdites surfaces latérales (22b, 22c) ayant une inclinaison vers l'extérieur du siège annulaire (22).

8. Procédé selon la revendication 7, dans lequel la première et la deuxième surface latérale (22b, 22c) ont respectivement une première et une deuxième partie proximale cylindrique (22b', 22c'), suivies respectivement d'une première et d'une deuxième portion distale inclinée (22b", 22c").

9. Procédé selon la revendication 8, dans lequel la première partie distale inclinée (22b") a une inclinaison supérieure à celle de la seconde portion distale inclinée (22c").

10. Procédé selon l'une des revendications 7 ou 8, dans lequel ladite paroi annulaire intérieure (25) a une longueur supérieure à celle de la paroi annulaire extérieure (24).

11. Procédé selon l'une des revendications précédentes, dans lequel ledit raccord (20) comporte au moins un profilé de fixation non cylindrique (40), ladite étape de fixation de ladite extrémité de fixation de tuyau (11) sur l'extrémité de fixation de raccord (21) au moyen d'un soudage par rotation comprenant une étape préliminaire consistant à coupler un mandrin d'une machine de soudage par rotation audit profilé de fixation (40).

12. Procédé selon la revendication 11, dans lequel ledit profilé de fixation est un profil polygonal creux, opposé à l'extrémité de fixation de raccord (21).
